# FASCICULE DE BREVET EUROPEEN

(11) **EP 2 231 382 B1**
(45) Date de publication et mention de la délivrance du brevet: **02.09.2015**
(21) Numéro de dépôt: 08865489.2
(22) Date de dépôt: 16.12.2008
(51) Int. Cl.: B29C 49/48, B29C 33/04, B29C 49/64, B29C 49/06, B29C 49/18, B29K 67/00, B29C 49/58

(54) **MOULE POUR LA FABRICATION DE RECIPIENTS THERMOPLASTIQUES ET INSTALLATION DE SOUFFLAGE OU D'ETIRAGE-SOUFFLAGE EQUIPEE D'UN TEL MOULE**
FORMWERKZEUG ZUR HERSTELLUNG VON THERMOPLASTISCHEN BEHÄLTERN UND BLASFORM- ODER STRECKFORMAUSRÜSTUNG MIT SOLCH EINEM FORMWERKZEUG
MOULD FOR MAKING THERMOPLASTIC CONTAINERS AND BLOW MOULDING OR STRETCH-BLOW MOULDING EQUIPMENT INCLUDING SUCH MOULD

(30) Priorité: 17.12.2007 FR 0759903
(43) Date de publication de la demande: 29.09.2010
(73) Titulaire: Sidel Participations, 76930 Octeville Sur Mer (FR)
(72) Inventeur: ROUSSEAU, Nicolas, F-76930 Octeville-sur-Mer (FR); NORTURE, Michel, F-76930 Octeville-sur-Mer (FR)
(74) Mandataire: Cabinet Plasseraud
(86) Numéro de dépôt international: PCT/FR2008/052322
(87) Numéro de publication internationale: WO 2009/081027

(56) Documents cités:
- FR-A- 2 764 544
- GB-A- 2 050 919
- JP-A- 57 012 618
- JP-A- 57 084 825
- US-A1- 2004 202 746
- US-B1- 6 447 281

## Description

La présente invention porte sur un moule pour la fabrication de récipients en matériau thermoplastique, notamment des bouteilles, en matière thermoplastique telle que du PET (polyéthylène téréphtalate), par soufflage ou étirage-soufflage d'une ébauche (par exemple des préformes), ledit moule ayant une face qui est munie d'une ouverture communiquant avec une cavité de moulage.

Des moules permettant d'obtenir des récipients à partir d'ébauches sont maintenant bien connus. Il est ainsi connu de mouler par soufflage ou étirage-soufflage, à partir d'une ébauche en matériau thermoplastique, dont le corps est porté à une température au moins égale à la température de ramollissement du matériau, soit un récipient ayant sa forme définitive, soit un récipient intermédiaire qui sera par la suite de nouveau soufflé ou étiré et soufflé. Il est entendu dans la suite de la description par ébauche soit une préforme, soit un tel récipient intermédiaire, l'ébauche dans tous les cas présentant une partie de col munie d'une collerette s'étendant sensiblement dans un plan transversal à l'axe longitudinal de l'ébauche.

De manière courante, la préforme en matière thermoplastique est fabriquée par moulage par injection, avec son col muni de sa collerette qui est dans sa conformation définitive, c'est-à-dire dans sa forme et ses dimensions exactes qu'il doit avoir une fois le récipient final obtenu. C'est pourquoi, il est particulièrement important d'éviter de réchauffer cette partie de la préforme ou du récipient intermédiaire afin d'éviter qu'elle se déforme, ce qui aboutirait à la mise au rebut du récipient soufflé, et donc en une perte financière.

Or, certains processus de fabrication, comme décrits dans les documents GB 2050919, qui décrit un moule selon le préambule de la revendication 1, JP 57 012618 et US 2004/0202746, nécessitent que le moule soit chaud (et donc soit chauffé ou, tout au moins, maintenu à une température régulée) pour l'obtention de récipients présentant des caractéristiques particulières leur permettant de supporter ultérieurement, par exemple, des effets thermiques déterminés sans déformation notable. Il en est ainsi notamment des récipients destinés à être remplis à chaud (par exemple avec des liquides tels que du thé, jus de fruit pasteurisé, etc.) ou encore de ceux appelés à subir un processus de pasteurisation de leur contenu.

Aussi, quand le moule est chauffé, une possibilité de réchauffement de la partie de col de l'ébauche intervient, au moment de l'opération de soufflage ou de l'étirage-soufflage, quand le corps de l'ébauche est placé dans la cavité de moulage, en reposant sur le moule par sa collerette.

Afin d'éviter le réchauffement de la partie de col et de la collerette de l'ébauche, il est connu d'aménager le moule, comme décrit dans le document JP 57 084825, par exemple, avec des moyens de refroidissement. Ces moyens sont constitués de demi-bagues qui entourent le col du récipient et chaque demi-bague est agencée de manière que sa température soit régulée par des moyens de refroidissement appropriés de telle sorte que toute la zone du col, et pas seulement la collerette, soit maintenue à une température suffisamment basse pour éviter tout risque de déformation.

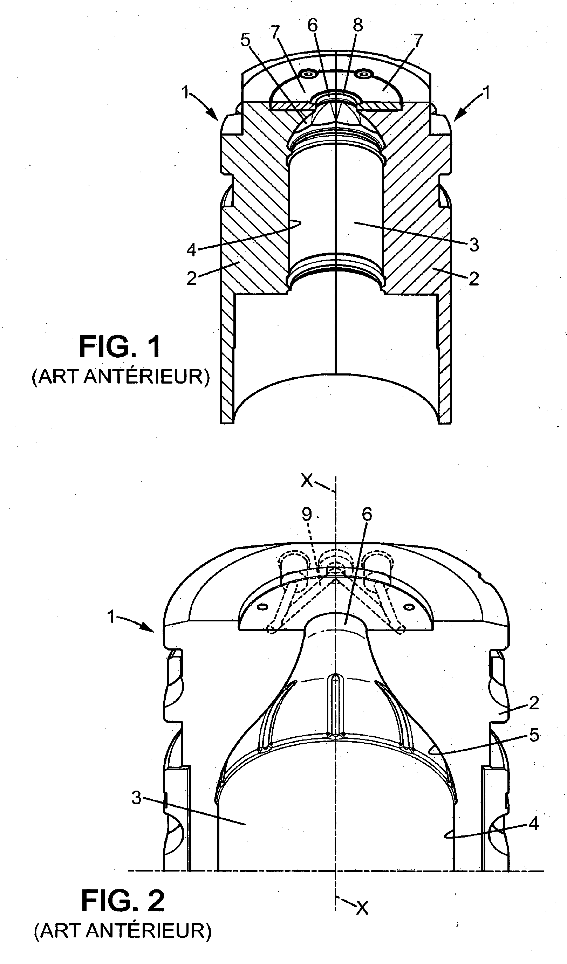

De manière plus précise, les figures 1 et 2 représentent deux vues partielles en coupe et en perspective d'un dispositif de moulage selon l'art antérieur, lequel art antérieur, concernant la figure 2, est décrit dans le document publié aujourd'hui sous le numéro WO2008/009808.

Le dispositif de moulage représenté figure 1 comprend un moule 1 qui comporte deux demi-moules 2 mobiles l'un par rapport à l'autre.

La cavité 3 formée par les deux demi-moules 2 présente l'empreinte du récipient final, non représenté sur les figures ; cette cavité 3 axiale est constituée de l'empreinte 4 qui correspond au corps du récipient, de l'empreinte 5 qui correspond à l'épaule dudit récipient et de l'empreinte qui correspond à la partie sous collerette et qui forme un orifice 6 mettant ladite cavité 3 en communication avec l'extérieur du moule 1. Sur les différentes figures, le fond du moule 1 n'est pas représenté.

Chaque demi-moule 2 présente, sur sa face supérieure, une demi-bague 7. En position de fermeture des deux demi-moules 2, les demi-bagues 7 forment, conjointement, une bague annulaire qui sert notamment de surface d'accueil et d'appui pour la collerette de l'ébauche, non représentée. Cette surface d'accueil et d'appui fait office de siège 8 pour la collerette du récipient. Chaque demi-bague 7 d'appui est fixée sur son demi-moule 2 par des vis, par exemple.

Les demi-bagues 7 forment également une surface d'accueil pour la tuyère de soufflage, et en particulier une tuyère comme celle qui est décrite dans le document publié sous le n° FR 2 764 544.

De manière courante et, comme cela apparaît plus clairement figure 2, il est prévu, directement à l'intérieur de chaque demi-moule 2, une pluralité de canaux 9 dans lesquels est apte à circuler un fluide de refroidissement (en général de l'eau réfrigérée) de manière à maintenir chaque demi-bague 7 d'appui, non représentée sur cette figure 2, à une température non susceptible d'entraîner une déformation de la collerette et du col de l'ébauche ; ces canaux 9 de refroidissement forment un circuit qui a une allure de W.

Ainsi, il peut être remarqué que, de par cet agencement en W des canaux 9 de refroidissement, le pourtour semi-circulaire de l'orifice 6 du demi-moule 2, contre lequel vient en appui la partie immédiatement sous la collerette de l'ébauche, n'est pas refroidie de manière homogène par lesdits canaux 9 de refroidissement ; ces derniers passent à une distance plus ou moins grande par rapport à cet orifice 6.

De plus, selon l'art antérieur, les canaux 9 de refroidissement sont directement formés dans les deux demi-moules 2. Ils doivent donc être formés par alésage, ce qui rend leur formation difficile et leur agencement limité, car il n'est alors possible que de former des canaux de refroidissement rectilignes, d'où la nécessité de réaliser une forme en W pour le circuit de refroidissement. Ils sont également difficiles d'accès lors d'opération de nettoyage. Il serait donc avantageux de réaliser, autour de l'axe xx du moule 1, des moyens de refroidissement faciles d'entretien tout en permettant un refroidissement plus homogène de la partie du moule destinée à être en contact avec la collerette de l'ébauche.

La présente invention se propose de résoudre ces différents problèmes. Ils sont résolus par l'ensemble des caractéristiques de la revendication 1.

Ainsi, selon un premier de ses aspects, la présente invention porte sur un moule pour la fabrication de récipients en matériau thermoplastique par soufflage ou étirage-soufflage d'une ébauche possédant un col pourvu d'une collerette, lequel moule présente au moins une cavité axiale de moulage avec un orifice ouvert vers l'extérieur et il comporte, d'une part, plusieurs circuits pour canaliser des fluides de chauffage et de refroidissement et, d'autre part, des moyens pour isoler thermiquement la zone de la collerette au niveau dudit orifice et la zone qui correspond à l'empreinte de l'épaule dudit récipient, lequel circuit de refroidissement de ladite zone de la collerette est gravé dans l'épaisseur d'un couvercle qui couvre lesdits moyens d'isolation thermique, lequel circuit est gravé sur la face dudit couvercle qui est orientée vers lesdits moyens d'isolation, ces deniers faisant office de paroi de fermeture et d'étanchéité pour ledit circuit de refroidissement.

Selon une disposition préférentielle de l'invention, le moule comporte un couvercle qui forme l'entrée de l'orifice de la cavité de moulage, laquelle entrée est aménagée sous la forme d'un siège pour accueillir la collerette de l'ébauche.

Toujours selon l'invention, les moyens d'étanchéité interposés entre le couvercle et la zone de l'empreinte correspondant à l'épaule se présentent sous la forme d'une pièce thermiquement isolante, laquelle pièce est positionnée dans un logement radial aménagé entre le siège de la collerette et la zone correspondant à l'empreinte de l'épaule du récipient.

Selon une autre disposition de l'invention, la pièce d'isolation comporte, du côté du couvercle, une gorge creusée sur son pourtour pour accueillir un joint d'étanchéité qui entoure le circuit de refroidissement.

Toujours selon l'invention, le circuit de refroidissement présente une partie qui est homothétiquement identique à l'ouverture de l'orifice de la cavité de moulage.

Selon une autre disposition de l'invention, la pièce isolante présente une première surface plane, du côté du couvercle, et une seconde surface, du côté de l'empreinte de l'épaule du moule, ladite seconde surface étant munie de lamages qui sont aptes à accueillir des garnitures en matériau thermiquement isolant.

Toujours selon l'invention, la pièce isolante forme au moins une partie d'un anneau avec un jour central de dimension sensiblement complémentaire à l'orifice.

Selon une autre disposition de l'invention, le couvercle comprend un lamage pour accueillir tout ou partie de la pièce d'isolation.

Toujours selon l'invention, le moule peut, lui aussi, comporter un lamage pour accueillir tout ou partie de la pièce d'isolation.

Selon une autre disposition de l'invention, le moule comprend au moins deux demi-moules écartables l'un de l'autre et chaque demi-moule est équipé d'une portion de couvercle respectif, de sorte que chaque demi-moule comprend au moins un circuit de refroidissement de la collerette.

L'invention concerne également l'installation de soufflage ou d'étirage-soufflage pour la fabrication de récipients à partir d'ébauches en polymère thermoplastique disposées dans une cavité de moulage d'un moule muni d'un orifice communiquant avec ladite cavité, lequel orifice est bordé d'un siège pour accueillir la collerette desdites ébauches, ces dernières étant pourvues d'un col qui, en position de soufflage, émerge hors dudit orifice tandis que leur corps est engagé dans ladite cavité de moulage, ledit moule étant agencé selon les dispositions détaillées précédemment.

La présente invention est maintenant décrite à l'aide d'un exemple uniquement illustratif et nullement limitatif de la portée de la présente invention, et à partir des illustrations suivantes, dans lesquelles :
- la figure 1 est une vue partielle en perspective en coupe d'un dispositif de moulage selon l'art antérieur ;
- la figure 2 est une vue partielle en perspective d'un moule, selon l'art antérieur, montrant les moyens de refroidissement de la partie de col de l'ébauche, comme décrits dans le document WO2008/009808;
- la figure 3 est une vue partielle en perspective d'un moule équipé des moyens de refroidissement du col d'une ébauche selon l'invention ;
- la figure 4 est une vue supérieure du couvercle de refroidissement avec une représentation, en pointillés, du chemin de circulation du fluide de refroidissement à l'intérieur dudit couvercle ;

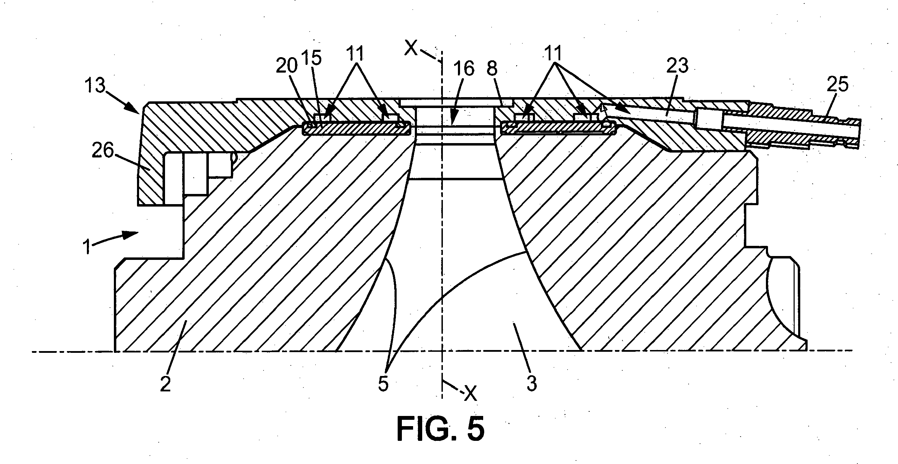

- la figure 5 est une vue en coupe selon 5-5 de la figure 4 montrant les moyens de refroidissement du col d'une ébauche selon l'invention ;
- la figure 6 est une vue inférieure en perspective du couvercle de refroidissement selon l'invention ;
- la figure 7 est une vue partielle en perspective éclatée d'un moule avec la pièce d'isolation qui se situe entre la, surface supérieure du moule et le couvercle qui comporte le circuit de refroidissement ;
- la figure 8 est une vue inférieure de la pièce d'isolation.

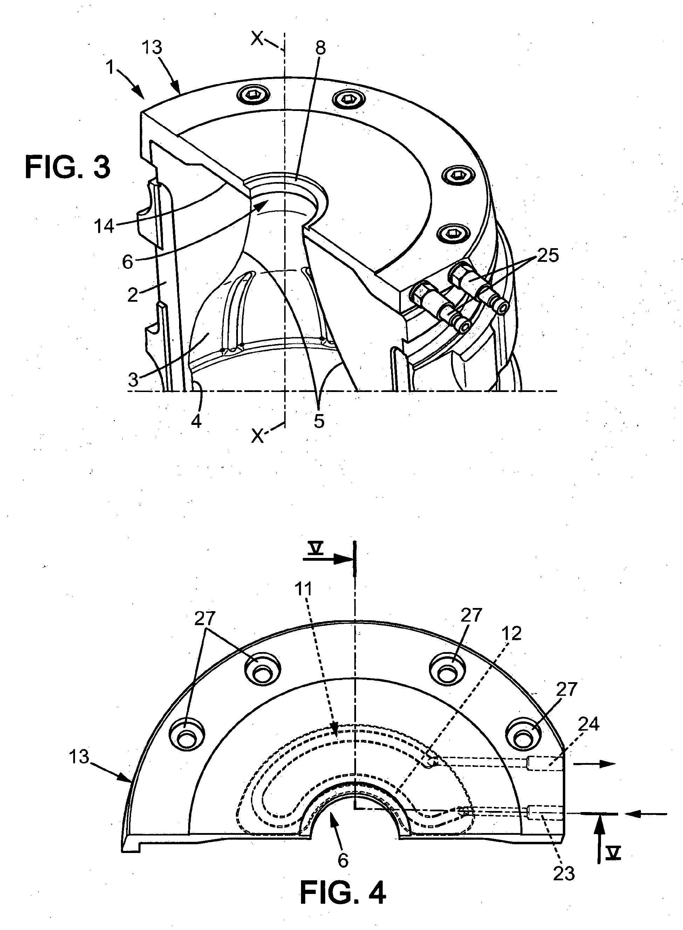

Comme cela est représenté plus précisément sur la figure 3, la présente invention a pour objet un moule 1 pour la fabrication de récipients en matériau thermoplastique par soufflage ou étirage-soufflage d'une ébauche (en général une préforme ou une préforme pré-soufflée), ledit moule 1 ayant une face qui est munie de l'orifice 6 communiquant avec la cavité 3 de moulage.

Les éléments identiques au moule 1 selon l'art antérieur sont référencés par les mêmes numéros.

L'invention s'applique plus particulièrement, mais non exclusivement, pour les moules permettant de souffler ou d'étirer-souffler les ébauches à chaud, c'est-à-dire les moules dans lesquelles un circuit de chauffage est prévu à l'intérieur du moule de manière à réchauffer le pourtour intérieur de la cavité 3 de moulage.

Usuellement, la face du moule 1 qui est munie de l'orifice 6 est la surface supérieure dudit moule 1 (l'opération de soufflage ou d'étirage/soufflage se faisant alors par le haut du moule) ; toutefois le principe général de l'invention s'applique également pour toute face du moule présentant une ouverture qui communique avec une cavité de moulage.

Le moule 1 comprend, comme visible figure 4, un circuit 11 de circulation d'un fluide de refroidissement (préférentiellement de l'eau réfrigérée).

Avantageusement, le circuit 11 de refroidissement n'est plus creusé à l'intérieur du moule 1, comme cela est le cas selon l'art antérieur avec les canaux 9 de refroidissement tels que représentés sur la figure 2.

L'invention offre l'avantage de pouvoir réaliser un circuit 11 de refroidissement par un usinage autre qu'un perçage.

Le circuit 11 présente une partie 12 sensiblement homothétiquement identique à l'orifice 6 du moule 1 communiquant avec la cavité 3 de moulage, ce grâce à quoi il est ainsi possible de refroidir de manière sensiblement homogène le pourtour dudit orifice 6 et, par voie de conséquence, la collerette de l'ébauche. Le circuit 11 présente donc une forme générale qui s'apparente à celle d'un haricot avec au moins une partie qui se situe à distance constante par rapport à l'orifice 6.

Selon une forme de réalisation préférentielle de l'invention, le circuit 3 de refroidissement est au moins partiellement formé dans au moins une partie d'un couvercle 13, ou chapeau, qui est solidarisé à la surface 14 du moule 1.

Ce couvercle 13 comporte le siège 8 sur lequel va prendre appui la collerette de l'ébauche ; cette collerette sera ainsi refroidie par la circulation du fluide de refroidissement dans le couvercle 13.

L'invention s'appliquant plus particulièrement à un moule 1 comprenant au moins deux demi-moules 2 écartables l'un de l'autre, chaque demi-moule 2 est alors équipé d'une partie du couvercle 13 de refroidissement (en général il s'agit d'un demi-couvercle 13 de refroidissement), de sorte que chaque demi-moule 2 comprend au moins un circuit 11 de refroidissement partiellement en regard de la surface 14. du demi-moule 2. Ce circuit 11 est gravé, en forme de haricot, dans l'épaisseur du couvercle 13, sur sa surface interne qui est posée sur le moule 1.

Le couvercle 13 permet de refroidir la collerette ainsi que la partie du col de l'ébauche qui ne doit pas être déformée lors de l'opération de soufflage ou d'étirage-soufflage, tandis que la partie de l'ébauche située dans la cavité 3 de moulage peut être soufflée ou étirée-soufflée à chaud.

Afin d'améliorer le refroidissement de la collerette de l'ébauche et de séparer thermiquement d'un côté le chauffage du moule 1, à savoir le pourtour intérieur de la cavité 3, et, de l'autre côté, le refroidissement de la collerette de l'ébauche, le couvercle 13 peut, avec la surface 14 du moule 1, délimiter un logement radial qui permet de positionner une pièce 15, préférentiellement du type isolante (c'est-à-dire formée en un matériau thermiquement isolant de type connu en soi), laquelle pièce 15 s'intercale et fait office d'interface entre ladite surface 14 du moule 1 et au moins une partie du circuit 11 de refroidissement.

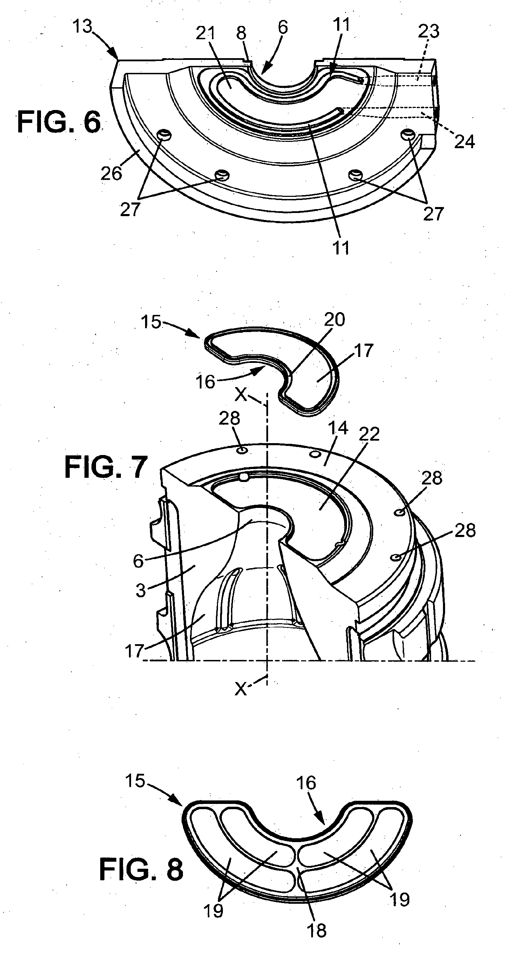

De manière générale, la pièce 15 d'isolation forme au moins une partie d'un anneau avec un orifice 16 central de dimension sensiblement complémentaire à l'orifice 6 du moule 1. Plus précisément, selon le mode de réalisation illustré sur les figures 7 et 8, la pièce 15 d'isolation se présente sous la forme d'au moins un demi-anneau de forme semi-circulaire apte à coopérer et à se solidariser avec un demi-couvercle 13 de refroidissement, lequel demi-couvercle 13 est prévu sur chaque demi-moule 2 du moule 1.

La pièce 15 présente une première surface 17 sensiblement plane (voir figure 7) orientée vers le couvercle 13 et une seconde surface 18 (voir figure 8) avec des lamages 19 définissant des volumes vides du côté de la surface 14 du moule 1. Une garniture en matériau isolant peut être positionnée dans chacun de ces lamages 19 de façon à renforcer l'effet isolant de la pièce 15.

De plus, la première surface 17 de la pièce 15 présente au moins une gorge 20, voir figure 7, sur son pourtour, dans laquelle est positionné un joint d'étanchéité. Ainsi, il est formé une liaison parfaitement étanche entre le couvercle 13 et cette première surface 17 de la pièce 15 qui constitue une paroi de fermeture et d'étanchéité du circuit 11 de refroidissement.

Le couvercle 13 présente un lamage 21 de forme sensiblement complémentaire à celle de la pièce 15 (voir figure 6), ce qui permet au moins de caler en position la pièce 15 par rapport au couvercle 13, laquelle pièce est intégrée en tout ou partie dans ledit lamage 21.

De la même façon, la surface 14 du moule 1 comporte un lamage 22 dans lequel se positionne, en tout ou partie également, la pièce 15 d'isolation.

Ces deux lamages 21 et 22 forment le logement radial d'accueil de cette pièce 15 d'isolation qui réalise une rupture de pont thermique entre la zone du siège 8 et la zone de l'empreinte 5 de l'épaule.

De manière générale, le circuit 11 de refroidissement présente une zone de circulation du fluide de refroidissement dans laquelle le fluide de refroidissement est partiellement en contact avec la pièce 15 et/ou éventuellement la surface 14 du moule 1.

En effet, comme cela est représenté plus précisément sur les figures 6 et 7, le couvercle 13 comprend un canal 23 d'entrée du fluide de refroidissement et un canal 24 de sortie du fluide de refroidissement, auxquels sont connectés des raccords 25 fluidiques (voir figure 3), de type connu en soi.

Le canal 23 d'entrée débouche dans le circuit 11 de refroidissement qui est taillé, en forme de gorge, dans l'épaisseur du couvercle 13, lequel couvercle est également aménagé pour accueillir la pièce 15 d'isolation, de sorte que, quand ladite pièce 15 est mise en place sur le couvercle 13, le circuit 11 est fermé par la première surface 17 de ladite pièce 15.

Le couvercle 13 comprend l'orifice 6 central qui présente une décrochement pour former le siège 8 sur lequel est apte à venir en appui la collerette de l'ébauche.

Le circuit 11 de refroidissement dans le couvercle 13 passe de manière limitrophe à l'orifice 6 central du couvercle 13, de façon à refroidir au mieux et de manière homogène la zone de la collerette en appui sur le siège 8 dudit couvercle 13.

Le circuit 11 présente donc une partie passant de manière proche à l'ouverture du couvercle 13, cette partie correspondant à la partie sensiblement homothétiquement identique à l'orifice 6 dudit couvercle et du moule 1.

Le chemin aller du fluide de refroidissement dans le circuit 11 est sensiblement limitrophe au rebord interne de la pièce 15 d'isolation tandis que le chemin retour du fluide de refroidissement est sensiblement limitrophe du rebord externe de ladite pièce 15.

Afin de permettre une meilleure solidarisation du couvercle 13 sur la surface 14 du moule 1, le couvercle 13 présente une jupe 26 annulaire sur son pourtour extérieur ainsi qu'une pluralité d'alésages 27 pour sa fixation, par exemple à l'aide de vis, sur la surface 14 du moule 1, qui présente également des trous 28 taraudés.

La présente invention porte, de manière plus générale, selon un autre de ses aspects, sur une installation de soufflage ou d'étirage-soufflage pour la fabrication de récipients à partir d'ébauches en polymère thermoplastique, chaque ébauche est disposée dans la cavité 3 du moule 1 et, tel que précédemment décrit, le col de ladite ébauche émerge hors de la surface 14 sur laquelle elle est en appui par une collerette annulaire tandis que son corps est engagé dans ladite cavité 3 de moulage dudit moule 1.

L'installation de soufflage peut comporter une tuyère de soufflage du type tuyère-cloche pour le soufflage d'un fluide sous pression à l'intérieur d'une ébauche disposée dans la cavité 3 de moulage du moule, la tuyère ayant son extrémité conformée en cloche qui est propre, lors du soufflage, à coiffer de manière étanche le col de l'ébauche qui émerge hors du moule, et plus particulièrement dans le mode de réalisation illustré sur les figures, à être mise en appui frontal étanche contre le couvercle 13.

## Revendications

1. Moule pour la fabrication de récipients en matériau thermoplastique par soufflage ou étirage-soufflage d'une ébauche possédant un col pourvu d'une collerette, lequel moule présente au moins une cavité (3) axiale de moulage avec un orifice (6) ouvert vers l'extérieur et il comporte, d'une part, plusieurs circuits pour canaliser des fluides de chauffage et de refroidissement et, d'autre part, des moyens pour isoler thermiquement la zone de la collerette au niveau dudit orifice (6) et la zone qui correspond à l'empreinte de l'épaule dudit récipient,
**caractérisé en ce que** le circuit (11) de refroidissement de ladite zone de la collerette est gravé dans l'épaisseur d'un couvercle (13) qui couvre lesdits moyens d'isolation thermique, lequel circuit est gravé sur la face dudit couvercle (13) qui est orientée vers lesdits moyens d'isolation, ces derniers faisant office de paroi de fermeture et d'étanchéité pour ledit circuit (11) de refroidissement.

2. Moule selon la revendication 1, **caractérisé en ce qu'**il comporte un couvercle (13) qui forme l'entrée de l'orifice (6) de la cavité (3) de moulage, laquelle entrée est aménagée sous la forme d'un siège (8) pour accueillir la collerette de l'ébauche.

3. Moule selon la revendication 2, **caractérisé en ce qu'**il comporte des moyens d'étanchéité qui se présentent sous la forme d'une pièce (15) thermiquement isolante, laquelle pièce (15) est positionnée dans un logement radial aménagé entre le siège (8) de la collerette et la zone correspondant à l'empreinte (5) de l'épaule du récipient.

4. Moule selon la revendication 3, **caractérisé en ce que** la pièce (15) comporte, du côté du couvercle (13), une gorge (20) creusée sur son pourtour pour accueillir un joint d'étanchéité qui entoure le circuit (11) de refroidissement.

5. Moule selon la revendication 4, **caractérisé en ce que** le circuit (11) de refroidissement présente une partie qui est homothétiquement identique à l'ouverture de l'orifice (6) de la cavité (3) de moulage.

6. Moule selon la revendication 4, **caractérisé en ce que** la pièce (15) d'isolation présente une première surface (17) plane, du côté du couvercle (13), et une seconde surface (18), du côté de l'empreinte (5) de l'épaule, ladite seconde surface étant munie de lamages (19) aptes à accueillir des garnitures en matériau thermiquement isolant.

7. Moule selon la revendication 6, **caractérisé en ce que** la pièce (15) d'isolation forme au moins une partie d'un anneau avec un jour central de dimension sensiblement complémentaire à l'orifice (6).

8. Moule selon la revendication 4, **caractérisé en ce que** le couvercle (13) comprend un lamage (21) pour accueillir la pièce (15) d'isolation.

9. Moule selon la revendication 4, **caractérisé en ce qu'**il comprend, sur sa surface (14) d'accueil de la pièce (15) d'isolation, un lamage (22) formant une partie du logement de la pièce (15) d'isolation.

10. Moule selon la revendication 4, **caractérisé en ce qu'**il comprend au moins deux demi-moules écartables l'un de l'autre et chaque demi-moule est équipé d'une portion de couvercle (13) respectif, de sorte que chaque demi-moule comprend au moins un circuit (11) de refroidissement de la collerette.

11. Installation de soufflage ou d'étirage-soufflage pour la fabrication de récipients à partir d'ébauches en polymère thermoplastique disposées dans une cavité (3) de moulage d'un moule (1) muni d'un orifice (6) communiquant avec ladite cavité (3), lequel orifice (6) est bordé d'un siège (8) pour accueillir la collerette desdites ébauches, ces dernières étant pourvues d'un col qui, en position de soufflage, émerge hors dudit orifice (6) tandis que leur corps est engagé dans ladite cavité (3) de moulage,
**caractérisée en ce que** ledit moule (1) est agencé selon l'une quelconque des revendications précédentes.

## Patentansprüche

1. Formwerkzeug zur Herstellung von thermoplastischen Behältern durch Blasformung oder Streckblasformung eines Rohlings, der einen mit einem Kragen versehenen Hals besitzt, wobei das Formwerkzeug zumindest einen axialen Formhohlraum (3) mit einem nach außen offenen Loch (6) aufweist und einerseits mehrere Kreisläufe zum Kanalisieren der Heiz- und Kühlmedien sowie andererseits Mittel zum thermischen Isolieren des Kragenbereichs in Höhe des Lochs (6) und des Bereichs, der dem Abdruck der Schulter des Behälters entspricht, umfasst,
**dadurch gekennzeichnet, dass** der Kühlkreislauf (11) des Kragenbereichs in die Dicke eines Deckels (13), der die Mittel zur thermischen Isolierung bedeckt, eingeprägt ist, wobei der Kreislauf auf der Seite des Deckels (13) eingraviert ist, die den Isolationsmitteln zugewandt ist, wobei Letztere als Verschluss- und Abdichtungswand für den Kühlkreislauf (11) dienen.

2. Formwerkzeug nach Anspruch 1, **dadurch gekennzeichnet, dass** es einen Deckel (13) aufweist, der den Eingang des Lochs (6) des Formhohlraums (3) ausbildet, wobei der Eingang in Form eines Sitzes (8) zur Aufnahme des Rohlingkragens gestaltet ist.

3. Formwerkzeug nach Anspruch 2, **dadurch gekennzeichnet, dass** es Abdichtungsmittel aufweist, welche die Form eines thermisch isolierenden Bauteils (15) aufweisen, wobei das Bauteil (15) in einer Radiallagerung angeordnet ist, die zwischen dem Sitz (8) des Kragens und dem Bereich, der dem Schulterabdruck (5) des Behälters entspricht, gestaltet ist.

4. Formwerkzeug nach Anspruch 3, **dadurch gekennzeichnet, dass** das Bauteil (15) auf der Seite des Deckels (13) eine Kehle (20) aufweist, die entlang ihres Umfangs eingetieft ist, um eine den Kühlkreislauf (11) umgebende Dichtung aufzunehmen.

5. Formwerkzeug nach Anspruch 4, **dadurch gekennzeichnet, dass** der Kühlkreislauf (11) einen Teil beinhaltet, der homothetisch identisch mit der Öffnung des Lochs (6) des Formhohlraums (3) ist.

6. Formwerkzeug nach Anspruch 4, **dadurch gekennzeichnet, dass** das Isolationsbauteil (15) eine erste ebene Fläche (17) auf der Seite des Deckels (13) und eine zweite Fläche (18) auf der Seite des Schulterabdrucks (5) beinhaltet, wobei die zweite Fläche mit Senkungen (19) ausgestattet ist, die geeignet sind, Einlagen aus thermisch isolierendem Material aufzunehmen.

7. Formwerkzeug nach Anspruch 6, **dadurch gekennzeichnet, dass** das Isolationsbauteil (15) zumindest einen Teil eines Rings mit einer mittleren Hohlnaht, deren Abmessungen im Wesentlichen komplementär zum Loch (6) sind, ausbildet.

8. Formwerkzeug nach Anspruch 4, **dadurch gekennzeichnet, dass** der Deckel (13) eine Senkung (21) zum Aufnehmen des Isolationsbauteils (15) umfasst.

9. Formwerkzeug nach Anspruch 4, **dadurch gekennzeichnet, dass** es auf seiner Fläche (14) zur Aufnahme des Isolationsbauteils (15) eine Senkung (22) umfasst, die einen Teil der Lagerung des Isolationsbauteils (15) ausbildet.

10. Formwerkzeug nach Anspruch 4, **dadurch gekennzeichnet, dass** es zumindest zwei auseinanderspreizbare Halbformwerkzeuge umfasst und dass jedes Halbformwerkzeug mit einem jeweiligen Deckelabschnitt (13) ausgestattet ist, sodass jedes Halbformwerkzeug zumindest einen Kreislauf (11) zur Kühlung des Kragens umfasst.

11. Blasform- oder Streckblasformausrüstung zur Herstellung von Behältern aus Rohlingen aus thermoplastischem Polymer, die in einem Formhohlraum (3) eines Formwerkzeugs (1) angeordnet sind, das mit einem Loch (6) versehen ist, welches mit dem Hohlraum (3) in Verbindung steht, wobei das Loch (6) durch einen Sitz (8) zur Aufnahme des Kragens der Rohlinge begrenzt ist, wobei Letztere mit einem Hals versehen sind, der in Blasformungsposition aus dem Loch (6) hervorragt, während ihr Körper im Formhohlraum (3) liegt,
**dadurch gekennzeichnet, dass** das Formwerkzeug (1) nach einem der vorangehenden Ansprüche angeordnet ist.

## Claims

1. A mold for fabricating containers made of thermoplastic material by blow-molding or stretch-blow molding a blank having a neck provided with a rim, which mold has at least one axial molding cavity (3) with an orifice (6) open towards the outside and has both a plurality of circuits for channeling heating and cooling fluids and also thermal insulation means for thermally insulating the zone of the rim at said orifice (6) and the zone that corresponds to the impression of the shoulder of said container;
said mold being **characterized in that** the cooling circuit (11) for cooling said zone of the rim is etched in the thickness of a lid (13) that covers said thermal insulation means, said circuit being etched in the face of said lid (13) that faces towards said insulation means, which insulation means act as a closure and sealing wall for said cooling circuit (11).

2. A mold according to claim 1, **characterized in that** it has a lid (13) that forms the inlet of the orifice (6) of the molding cavity (3), which inlet is arranged in the form of a seat (8) for receiving the rim of the blank.

3. A mold according to claim 2, **characterized in that** it has sealing means that are in the form of a thermally insulating piece (15) that is positioned in a radial housing arranged between the seat (8) for the rim and the zone corresponding to the impression (5) of the shoulder of the container.

4. A mold according to claim 3, **characterized in that**, on the same side as the lid (13), the piece (15) is provided with a groove (20) formed around its periphery for the purpose of receiving a sealing gasket that surrounds the cooling circuit (11).

5. A mold according to claim 4, **characterized in that** the cooling circuit (11) has a portion that is of shape matching the shape of the opening of the orifice (6) of the molding cavity (3).

6. A mold according to claim 4, **characterized in that** the insulation piece (15) has a plane first surface (17) on the same side as the lid (13), and a second surface (18) on the same side as the impression (5) of the shoulder, said second surface being provided with recesses (19) suitable for receiving linings of thermally insulating material.

7. A mold according to claim 6, **characterized in that** the insulation piece (15) forms at least a portion of a ring with a central hole of size substantially complementary to the orifice (6).

8. A mold according to claim 4, **characterized in that** the lid (13) is provided with a recess (21) for receiving the insulation piece (15).

9. A mold according to claim 4, **characterized in that**, in its surface (14) for receiving the insulation piece (15), it is provided with a recess (22) forming a portion of the housing for the insulation piece (15).

10. A mold according to claim 4, **characterized in that** it comprises at least two half-molds that can be moved apart, and each half-mold is equipped with a respective lid portion (13), so that each half-mold has at least one cooling circuit (11) for cooling the rim.

11. A blow-molding or stretch-blow molding installation for fabricating containers from blanks of thermoplastic material that are disposed in a molding cavity (3) of a mold (1) provided with an orifice (6) communicating with said cavity (3), which orifice (6) is edged with a seat (8) for receiving the rim of each of said blanks, each blank being provided with a neck that, in the blowing position, emerges from said orifice (6) while its body is engaged in said molding cavity (3),
said installation being **characterized in that** said mold (1) is arranged according to any preceding claim.
